(19) **Europäisches Patentamt**

**European Patent Office**

**Office européen des brevets**

(11) **EP 0 749 998 A1**

(12) **EUROPÄISCHE PATENTANMELDUNG**

(43) Veröffentlichungstag:
**27.12.1996 Patentblatt 1996/52**

(51) Int. Cl.$^6$: **C08G 63/672**, C11D 3/37,
D06M 15/507

(21) Anmeldenummer: **96106333.6**

(22) Anmeldetag: **23.04.1996**

(84) Benannte Vertragsstaaten:
**AT BE CH DE DK ES FR GB IT LI NL SE**

(30) Priorität: **21.06.1995 DE 19522431**

(71) Anmelder: **HÜLS AKTIENGESELLSCHAFT**
**45764 Marl (DE)**

(72) Erfinder: **Koch, Herbert, Dr.**
**46282 Dorsten (DE)**

(54) **Schmutzlösepolymere auf Basis von Oligoestern als Bestandteil von Formulierungen zur Ablösung von Öl- und Fettschmutz**

(57) Die Erfindung betrifft Schmutzlösepolymere auf Basis von Oligoestern und Polyethylenglykolen mit Molekulargewichten von 3 500 bis 10 000 g/mol.
Die Schmutzlösepolymere sind Bestandteil von Formulierungen zur leichteren Ablösung von Öl- und Fettschmutz insbesondere bei Waschvorgängen und bei der Textilverarbeitung.

EP 0 749 998 A1

**Beschreibung**

Die Erfindung betrifft sogenannte Schmutzlösepolymere auf Basis von Oligoestern, die als Bestandteil von Formulierungen zur leichteren Ablösung von Öl- und Fettschmutz, insbesondere bei Waschvorgängen und bei der Textilverarbeitung, beitragen.

Schmutzlösepolymere auf Basis hydrophiler Polyester werden schon seit mehreren Jahren vermarktet. Zu den wichtigsten Verkaufsprodukten zählen ZELCON (Du Pont), MILEASE T (ICI), ALKARIL QCJ/QCF (Alkaril Inc.) und REPEL-O-TEX (Rhone Poulenc).

Die Wirkungsweise von Schmutzlösepolymeren beruht auf einer Modifizierung der Faseroberfläche von Polyester- bzw. Baumwoll/Polyestermischgeweben mit Hilfe des hydrophilierenden Polymers.

Der Feuchtigkeitstransport (Wasserabsorption und Saugfähigkeit) wird bei den mit den Schmutzlösepolymeren behandelten hydrophoben Geweben, wie Polyester oder Polyester/Baumwollmischgeweben, erheblich verbessert. Außerdem verleihen die Schmutzlösepolymere den Stoffen Antistatik- und Gleiteigenschaften, wodurch die Handhabung dieser Fasern beim Schneiden und Nähen (Textilverarbeitung) erleichtert wird. Die Behandlung der Gewebe mit den Schmutzlösepolymeren ist als eine Art Imprägnierung zu verstehen, d.h. die Schmutzlösepolymere verbleiben für mehrere Waschcyclen auf der Faser.

Bei der überwiegenden Anzahl der Schmutzlösepolymeren handelt es sich um Polyester auf Basis Terephthalsäure/Polyoxyalkylenglykole/monomere Glykole.

DE 14 69 403 beschreibt ein Verfahren zur oberflächenverändernden Behandlung von aus Polyestern abgeleiteten Artikeln. Dabei sind die hergestellten Polyester aus ET-Einheiten (ET = Ethylenterephthalat) und POET-Einheiten (POET = Polyoxyethylenterephthalat) aufgebaut mit ET : POET = 2 bis 6 : 1, wobei Polyethylenglykole mit Molgewichten von 1 000 bis 4 000 g/mol eingesetzt werden. Die Beschichtung der Faser erfolgt durch Wärmebehandlung mit dem Polyester bei Temperaturen von ca. 90 °C, wodurch das Gewebe eine dauerhafte Oberflächenbehandlung erfährt, die neben einer Wirkung als Schutzschicht auch eine statische Aufladung des Gewebes verhindert.

In US 4 427 557 und EP 0 066 944 werden anionische Modifikationen der oben genannten Polyester beschrieben, die als eine weitere Polymerisationskomponente das Natriumsalz der Sulfoisophthalsäure enthalten. Die Polyethylenglykole (PEG) besitzen Molgewichte von 200 bis 1 000 g/mol und ergeben nach ihrer Polymerisation mit Ethylenglykol und Terephthalsäure Oligoester mit Holgewichten von 2 000 bis 10 000 g/mol.

US 3 959 230 beansprucht ET/POET-Polyester mit ET : POET = 25 : 75 bis 35 : 65, wobei niedermolekulare Polyethylenglykole mit Molgewichten von 300 bis 700 g/mol eingesetzt werden und die gewonnenen Polyester Molgewichte von 25 000 bis 55 000 g/mol aufweisen.

Neben der Wirkung als Schmutzlösepolymer beansprucht EP 0 319 094 auch den Einsatz von ET/POET-Copolymeren als Textilhilfsmittel zur Behandlung von Wäsche in automatischen Wäschetrocknern. Hierbei werden besonders die Vorteile der antistatischen Eigenschaften der mit Schmutzlösepolymeren behandelten Wäsche herausgestellt.

Als kostengünstige Konfektionierung der Schmutzlösepolymeren, d. h. als ein Verfahren zum Einbringen von Schmutzlösepolymeren in eine wäßrige Formulierung bzw. in die Waschflotte, wird in US 4 740 326 ein "Coating" auf einen wasserunlöslichen Träger beschrieben. Als Pfropfungsgrundlage dienen verschiedene Fasersysteme, wie z. B. Nylon bzw. eine sog. Reemay-Faser.

Als eine weitere Variation der oben genannten Polyester wird das Einbringen von verzweigten monomeren Glykolbausteinen beansprucht, wie z. B. von 1,2-Propylen-, 1,2-Butylen- und 3-Methoxy-1,2-propylenglykolen (EP 0 241 985).

Die Performance der eingesetzten Schmutzlösepolymeren (WO 9206152) kann in anionischen oder nichtionischen Tensidformulierungen besonders durch Zusatz von Tensiden auf Basis von Polyhydroxyfettsäureamiden (Glucamide) gesteigert werden.

Eine weitere Modifizierung der Polyester beinhaltet den Einbau von kationischen Komponenten auf Basis quaternärer Stickstoffverbindungen, die im Vergleich zu nichtionischen Polyestern noch wirkungsvoller sein sollen (US 4 956 447).

In EP 0 253 567 und EP 0 357 280 werden im besonderen auch endgruppenverschlossene Polyester (capped polyesters) beschrieben, die zum einen durch nichtionische Gruppen, wie z. B $C_1$- bis $C_4$-Alkyl, $C_1$- bis $C_4$-Hydroxyalkyl, $C_1$- bis $C_4$-Acyl, als auch durch ionische Succinatgruppen verschlossen werden.

Die Aktivität eines Schmutzlösepolymers in einer Flüssigwaschmittelformulierung sowie die Lagerstabilität der Formulierung läßt sich nach Aussage von DE 34 11 941 durch Zusatz geringer Salzmengen verbessern.

Als eine weitere Form der Konfektionierung von Schmutzlösepolymeren beschreibt DE 33 24 258 das Lösen bzw. Dispergieren eines PET/POET-Polyesters mit PET : POET = 2 bis 6 : 1 in einem flüssigen, nichtionischen Tensid und Versprühen dieser Mischung auf einen Builder.

Durch die Lagerung der Schmutzlösepolymeren zusammen mit alkalischen Waschmittelkomponenten erfahren die Schmutzlösepolymeren Aktivitätsverluste, die auf eine Hydrolyse der Esterbindungen zurückzuführen sind. Dem kann durch Zusammenschmelzen von PET/POET-Copolymeren mit Alkalimetallpolyacrylaten bei 70 bis 150 °C und anschließender Pulverisierung (US 4 571 303, US 4 569 772) entgegengewirkt werden.

Als besonderer Vorteil wird in DE 37 27 727 bei der Herstellung von PET/POET-Copolymeren der Einsatz von PET herausgestellt, das aus Abfallflaschen gewonnen wird.

In der EP 0 456 569 wird eine besondere Weichspülerformulierung beschrieben, die ein Schmutzlösepolymeres beinhaltet. Herkömmliche Formulierungen mit PET/POET-Schmutzlösepolymeren, anionischen bzw. nicht-ionischen Tensiden und kationischen Weichspülern werden mit der Zeit instabil und neigen zum Ausflocken. Durch den Einsatz einer wasserlöslichen Fraktion eines PET/POET-Copolymers kann dem entgegengewirkt werden.

DE 40 01 415 beansprucht die Darstellung und Verwendung eines Polyesters als vergrauungsinhibierender und schmutzablösender Zusatz zu pulverförmigen und flüssigen Waschmitteln. Die Polyester werden durch Kondensation von mindestens zwei Carboxylgruppen enthaltenden Carbonsäuren mit mehrwertigen Alkoholen erhalten. Zusätzlich werden noch alkoxylierte mehrwertige Alkohole eingesetzt, die durch Anlagerung von 5 bis 80 mol EO und/oder PO pro Mol Alkohol gewonnen werden. Die Produkte zeichnen sich durch eine verbesserte Wirksamkeit und eine bessere Verträglichkeit mit flüssigen und pulverförmigen Waschmittelformulierungen aus.

In der EP 0 523 956 wird eine Waschmittelformulierung beschrieben, die ein wasserlösliches bzw. wasserdispergierbares Copolymer beinhaltet, das ein UV-absorbierendes Monomer enthält. Die Herstellung dieses Schmutzlösepolymers erfolgt durch Polykondensation von DMT mit ET, PEG (Molgewicht 200 bis 3 000 g/mol) und Methyl-4-aminobenzoat (DMT = Dimethylterephthalat).

Merkmal der zur Zeit bekannten Schmutzlösepolymeren ist ihre geringe Wasserlöslichkeit bzw. ihre schlechte Dispergierbarkeit in Wasser. Dies bedingt, daß solche Substanzen nur zum Teil in die Waschflotte übergehen und somit schlechte Schmutzlöseeigenschaften aufweisen.

Um dieses Problem zu umgehen, müssen ionische Gruppen in die Polymeren eingebaut werden. Dies geschieht durch Einsatz ionischer Monomerer, wie z. B. Sulfoisophthalsäure bzw. ihrer Salze, kationischer Komponenten, wie z. B. quaternärer Stickstoffverbindungen, oder u. a. auch ionischer Endgruppen.

Die beschriebenen Schmutzlösepolymere und im besonderen jene mit ionischen Gruppen schmelzen erst bei höheren Temperaturen. Dies wirkt sich nachteilig hinsichtlich einer Konfektionierung aus, wobei das Schmutzlösepolymere aufgeschmolzen wird und z. B. auf einen Trägerstoff versprüht wird.

Aufgabe der vorliegenden Erfindung war somit die Entwicklung von Schmutzlösepolymeren ohne die geschilderten nachteiligen Merkmale und deren Verwendung insbesondere in Waschmittelformulierungen und bei der Textilverarbeitung.

Gegenstand der vorliegenden Erfindung sind Schmutzlösepolymere für Polyester enthaltende Fasern, dadurch gekennzeichnet, daß die Schmutzlösepolymere aus

a. 20 bis < 100 Gew.-% Oligoestern und
b. > 0 bis 80 Gew.-% unumgesetzten oder freiem Polyethylenglykol bestehen, wobei die Oligoester aus Terephthalsäure, monomerem Ethylenglykol und Polyethylenglykol hergestellt werden, das sowohl für die Oligoesterherstellung verwendete als auch das freie Polyethylenglykol jeweils ein Molekulargewicht von 3 000 bis 4 000 g/mol hat und die Schmutzlösepolymere Molekulargewichte von 3 500 bis 10 000 g/mol haben.

Die Erfindung betrifft insbesondere schmutzfreisetzende Ethylenterephthalat/Polyoxyethylenterephthalat-Copolymere mit weit niedrigeren als üblichen Molekulargewichten, die über verbesserte schmutzfreisetzende Eigenschaften verfügen. Die schmutzfreisetzende Wirkung ist dabei bemerkenswerterweise bei Polyester/Baumwollmischgeweben ausgeprägter als bei reinem Polyestergewebe.

Weiterer Gegenstand der Erfindung ist die Verwendung der Schmutzlösepolymeren insbesondere in Waschmittelformulierungen und bei der Textilverarbeitung.

Die Oligoester werden durch Umsetzung von Polyethylenglykolen mit Molgewichten von 3 000 bis 4 000 g/mol mit Dimethylterephthalat und Ethylenglykol erhalten und vorzugsweise auf Hydroxyl-Zahlen von 30 bis 70 mg KOH/g eingestellt. Die Schmutzlösepolymere enthalten > 0 bis 80 Gew.-%, vorzugsweise 10 bis 50 Gew.-%, unumgesetztes oder freies Polyethylenglykol. Sie zeigen hinsichtlich der Aufhellung von ölverschmutzten Geweben höhere Aufhellungsraten als vergleichbare Produkte mit höheren Molekulargewichten.

Die erhaltenen Schmutzlösepolymere sind in Wasser leicht dispergierbar, benötigen somit nicht den Einbau von hydrophilierenden (ionischen) Monomeren. Ihre Schmelzpunkte liegen vorzugsweise zwischen 30 und 100 °C, besonders bevorzugt zwischen 40 und 60 °C, so daß sie leicht aufgeschmolzen und z. B. auf eine Trägersubstanz aufgesprüht werden können.

Zur Darstellung der Schmutzlösepolymeren wird Dimethylterephthalat unter Zusatz eines Katalysators mit einem Gemisch aus Polyethylenglykolen und Ethylenglykol umgesetzt. Als Katalysatoren können sämtliche für Veresterungs- bzw. Umesterungsreaktionen bekannten Katalysatoren eingesetzt werden, wie z. B. Titanate, Gemische von Antimontrioxid und Calciumacetat, Stannane, Zinkacetat etc. Titanate sind jedoch grundsätzlich zu bevorzugen, da die Umsetzungen mit diesen Katalysatoren schneller ablaufen und die gewonnenen Produkte eine bessere Farbqualität aufweisen.

Nach der Umsetzung kann zusätzlich freies Polyethylenglykol zugesetzt werden, um den Gesamtgehalt an Polyethylenglykol auf den gewünschten Wert einzustellen.

Die Schmutzlösepolymere können auch endgruppenverschlossene Oligoester enthalten.

Die Schmutzlösepolymere eignen sich insbesondere als Bestandteil von Waschmittelformulierungen und als Bestandteil von Formulierungen bei der Textilverarbeitung.

## Beispiele

### Beispiel 1

In einen 4 l Mehrhalskolben mit Magnetrührer, Heizhaube, Innenthermometer, Kontaktthermometer, Kühler, Kühlfalle, Schutzgaseinleitung und Strömungsmesser wurden insgesamt 320.4 g (1.65 mol) Dimethylterephthalat, 1 500 g (0.5 mol) Polyethylenglykol mit einem Molgewicht von 3 000 g/mol (LIPOXOL 3 000 der Hüls AG), 195.4 g (3.15 mol) Ethylenglykol, 39.2 g (0.05 mol) Polyethylenglykolmonomethylether (MARLIPAL 1/17 der Hüls AG), 1.6 g 2,6-Di-tert.-butyl-p-kresol (Ionol von Shell) und 3.7 g Titantetraisopropylat gegeben. Die Reaktionsmischung wurde auf 180 bis 185 °C aufgeheizt und das gebildete Methanol aufgefangen. Dabei wurde ein leichter Schutzgasstrom (10 l/h) eingestellt. Nach ca. 24 h wurde bei gleichbleibender Reaktionstemperatur für weitere 24 h ein stärkerer Schutzgasstrom eingeblasen (ca. 80 l/h). Danach wurde der Reaktionsansatz kurzzeitig (ca. 4 h) auf 220 bis 230 °C hochgeheizt und, sowie das Produkt eine Hydroxylzahl von 50 bis 60 mg KOH/g erreicht hatte, die Reaktion abgebrochen.

### Beispiel 2

In Analogie zu Beispiel 1 wurden in der oben beschriebenen Apparatur 320.4 g (1.65 mol) Dimethylterephthalat, 2 000 g (0.5 mol) Polyethylenglykol mit einem Molgewicht von 4 000 g/mol (LIPOXOL 4 000), 195.4 g (3.15 mol) Ethylenglykol, 1.6 g 2,6-Di-tert.-butyl-p-kresol (Ionol von Shell) und 2.8 g Zinkacetat umgesetzt. Die Reaktion wurde abgebrochen, nachdem das Produkt eine Hydroxylzahl von 60 mg KOH/g erreicht hatte.

### Beispiel 3

In Analogie zu Beispiel 1 wurden in der oben beschriebenen Apparatur 320.4 g (1.65 mol) Dimethylterephthalat, 1 700 g (0.5 mol) Polyethylenglykol mit einem Molekulargewicht von 3 400 g/mol (PEG 3400, Carbowax 3400, Aldrich), 195.4 g (3.15 mol) Ethylenglykol, 1.6 g 2,6-Di-tert.-butyl-p-kresol (Ionol von Shell) und 3.7 g Titantetraisopropylat umgesetzt. Die Reaktion wurde abgebrochen, nachdem das Produkt eine Hydroxylzahl von 30 - 40 mg KOH/g erreicht hatte. In den noch heißen Reaktionsansatz wurden zum Schluß zusätzlich 250 g PEG 3400 eingerührt.

**Waschversuche unter Polymerzusatz an ölverschmutzten Geweben**

Die Schmutzlösepolymere wurden mit einer Konzentration von 1 % (Aktivsubstanz) in 2 Waschmittelformulierungen eingesetzt.

| Waschmittelformulierung I (Angaben in %) | |
|---|---|
| n-Alkylbenzolsulfonatpulver, Na-Salz | 5 |
| $C_{13}$-Oxoalkohol mit 9 Mol Ethylenoxid pro Mol | 4 |
| Pulverseife (Industrieseife LIGA MIIH) | 4 |
| Zeolith WESSALITH P | 30 |
| Natrium-metasilikat | 3 |
| Natrium-Perborat | 15 |
| TAED (Tetraacetylethylendiamin) | 2 |
| Schmutzlösepolymer | 1 |
| Rest zu 100 % Natriumhydrogencarbonat | |

| Waschmittelformulierung II (Angaben in %) | |
|---|---|
| n-Alkylbenzolsulfonatpulver, Na-Salz | 5 |
| $C_{13}$-Oxoalkohol mit 9 Mol Ethylenoxid pro Mol | 4 |
| Pulverseife (Industrieseife LIGA MIIH) | 4 |
| Zeolith WESSALITH P | 30 |
| Natrium-metasilikat | 3 |
| Schmutzlösepolymer | 1 |
| Rest zu 100 % Natriumhydrogencarbonat | |

Die Testgewebe (Polyestergewebe bzw. Baumwoll/Polyestergewebe der Wäschereiforschungsanstalt Krefeld, WFK) wurden zuerst mit den beschriebenen Formulierungen gewaschen und nach dem Trocknen die Remissionswerte gemessen. Anschließend wurden sie mit jeweils 5 Tropfen gebrauchtem Motoröl angeschmutzt. Nach einer Einwirkzeit von ca. 18 h wurde die Remission der angeschmutzten Gewebestücke ermittelt. Nach einem erneuten Waschgang mit den entsprechenden Formulierungen wurden die Remissionswerte zum Schluß noch einmal bestimmt.

Gewaschen wurde in Lini-Test-Laborwaschmaschinen.

| Waschtemperatur | 40 °C |
|---|---|
| Waschdauer | 12 Minuten |
| Wasserhärte | 13° dH |
| Waschmittelkonzentration | 5 g/l |
| Flottenverhältnis | ca. 1 : 83 |

Für die Berechnung der Aufhellung in % wurde die folgende Formel verwendet:

$$\text{Aufhellung [\%]} = \frac{(R3\text{-}R2)}{(R1\text{-}R2)} \times 100$$

R1    = Remission des gewaschenen Gewebes
R2    = Remission des ölverschmutzten Gewebes
R3    = Remission des erneut gewaschenen ölverschmutzten Gewebes

EP 0 749 998 A1

Tabelle

| Waschmittelformulierung | Aufhellung von Baumwoll/Polyester-Mischgewebe in [%] | Aufhellung von Polyestergewebe in [%] |
|---|---|---|
| I ohne Schmutzlösepolymer (Vergleich) | 8 | 4 |
| I mit REPEL-O-TEX (Vergleich) | 28.5 | 13 |
| I mit ZELCON (Vergleich) | 18 | 6 |
| I mit Bsp. 1 | 29.5 | 12.5 |
| I mit Bsp. 2 | 24 | 8 |
| I mit Bsp. 3 | 31 | 14 |
| II ohne Schmutzlösepolymer (Vergleich) | 11 | 6 |
| II mit REPEL-O-TEX (Vergleich) | 25 | 7 |
| II mit ZELON (Vergleich) | 19 | 6 |
| II mit Bsp. 1 | 28 | 8 |
| II mit Bsp. 2 | 21 | 7 |
| II mit Bsp. 3 | 30 | 10 |

**Patentansprüche**

1. Schmutzlösepolymere für Polyester enthaltende Fasern,
   dadurch gekennzeichnet,
   daß die Schmutzlösepolymere aus

   a. 20 bis < 100 Gew.-% Oligoestern und
   b. > 0 bis 80 Gew.-% unumgesetzten oder freiem Polyethylenglykol bestehen, wobei
   die Oligoester aus Terephthalsäure, monomerem Ethylenglykol und Polyethylenglykol hergestellt werden, das
   sowohl für die Oligoesterherstellung verwendete als auch das freie Polyethylenglykol jeweils ein Molekulargewicht von 3 000 bis 4 000 g/mol hat und die Schmutzlösepolymere Molekulargewichte von 3 500 bis 10 000
   g/mol haben.

2. Schmutzlösepolymere nach Anspruch 1,
   dadurch gekennzeichnet,
   daß die Schmutzlösepolymere eine Hydroxylzahl von 30 bis 70 mg KOH/g aufweisen.

3. Schmutzlösepolymere nach Anspruch 1,
   dadurch gekenzeichnet,
   daß der Schmelzpunkt 30 bis 100 °C, vorzugsweise 40 bis 60 °C, beträgt.

4. Schmutzlösepolymere nach Anspruch 1,
   dadurch gekennzeichnet,
   daß die Schmutzlösepolymere 10 bis 50 Gew.-% Polyethylenglykol enthalten.

5. Schmutzlösepolymere nach Anspruch 1,
   dadurch gekennzeichnet,
   daß die Schmutzlösepolymere endgruppenverschlossene Oligoester enthalten.

6. Verwendung der Schmutzlösepolymere nach den Ansprüchen 1 bis 5, als Bestandteil von Waschmittelformulierungen.

7. Verwendung der Schmutzlösepolymere nach den Ansprüchen 1 bis 5, als Bestandteil von Formulierungen bei der Textilverarbeitung.

| | Europäisches Patentamt | **EUROPÄISCHER RECHERCHENBERICHT** | Nummer der Anmeldung<br>EP 96 10 6333 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | WO-A-95 21880 (BASF AG ;BOECKH DIETER (DE); JAEGER HANS ULRICH (DE); SCHORNICK GU) 17.August 1995<br>* Seite 5, Zeile 1 - Zeile 35; Ansprüche 1-5; Beispiel 5 * | 1,5-7 | C08G63/672<br>C11D3/37<br>D06M15/507 |
| X | US-A-4 411 831 (ROBINSON RONALD A ET AL) 25.Oktober 1983<br>* Ansprüche 1-7 * | 1,5-7 | |
| D,X | EP-A-0 523 956 (UNILEVER PLC ;UNILEVER NV (NL)) 20.Januar 1993<br>* Seite 7, Zeile 24-34; Ansprüche 1-23 * | 1,5-7 | |
| D,X | EP-A-0 456 569 (COLGATE PALMOLIVE CO) 13.November 1991<br>* Seite 11, Zeile 41 - Seite 12, Zeile 38; Ansprüche 1-21 * | 1,3,5-7 | |
| P,X | DE-A-44 00 637 (HENKEL KGAA) 13.Juli 1995<br>* Seite 3, Zeile 31 - Zeile 46; Ansprüche 1-7 * | 1,5-7 | |

| | | | RECHERCHIERTE SACHGEBIETE (Int.Cl.6) |
|---|---|---|---|
| | | | C08G<br>C11D<br>D06M |

Der vorliegende Recherchenbericht wurde für alle Patentansprüche erstellt

| Recherchenort | Abschlußdatum der Recherche | Prüfer |
|---|---|---|
| DEN HAAG | 26.September 1996 | Ainscow, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)